# EUROPÄISCHE PATENTSCHRIFT

(11) **EP 1 813 415 B1**
(45) Veröffentlichungstag und Bekanntmachung des Hinweises auf die Patenterteilung: **18.11.2009**
(21) Anmeldenummer: 06019955.1
(22) Anmeldetag: 23.09.2006
(51) Int. Cl.: B29C 51/26, B23Q 1/00, B29C 33/30, B29C 51/46

(54) **Vorrichtung zum Klemmen eines austauschbaren Werkzeugs**
Device for clamping an exchangable tool
Dispositif pour serrer un outil interchangeable

(30) Priorität: 28.01.2006 DE 102006004093
(43) Veröffentlichungstag der Anmeldung: 01.08.2007
(73) Patentinhaber: UHLMANN PAC-SYSTEME GmbH & Co. KG, 88471 Laupheim (DE)
(72) Erfinder: Matzenmüller, Jürgen, 88416 Bellamont (DE); Knüppel, Jörg, 88477 Schwendi (DE); Gertitschke, Detlev Dipl.- Ing, 88471 Laupheim (DE)
(74) Vertreter: Wächter, Jochen

(56) Entgegenhaltungen:
- EP-A- 1 657 047
- GB-A- 2 252 746
- GB-A- 2 347 171
- US-A- 4 773 839
- US-B1- 6 475 423

## Beschreibung

Die Erfindung betrifft eine Arbeitsstation, insbesondere in einer Thermoformmaschine, mit einer Vorrichtung zum Klemmen eines austauschbaren Werkzeugs an einem eine Anschlagfläche für das Werkzeug bereitstellenden Werkzeugträger. Eine Arbeitsstation, gemäß dem Oberbegriff des Anspruchs 1, wird im Dokument GB 2252746 A offenbart.

Thermoformmaschinen zur Verarbeitung von Thermoformfolien weisen eine Vielzahl von Arbeitsstation auf, durch die die Thermoformfolie geführt wird, um diese so zu verarbeiten, dass am Ende des Arbeitsprozesses mit Produkten gefüllte Blisterpackungen vorliegen. Dazu wird beispielsweise in einer Heizstaion die Thermoformfolie auf die Verformtemperatur erwärmt, um nachfolgend in einer Formstation die Verformung der Thermoformfolie bewirken zu können. An diese Formstation schließt sich in der Regel die Füllstation an, in der in die ausgeformten Näpfe der Thermoformfolie Produkte eingefüllt werden. Weiterhin ist es erforderlich, so befüllte Näpfe in einer Siegelstation mit einer Deckfolie dauerhaft dicht zu versiegeln. Aus der einheitlichen verarbeiteten Thermoformfolie werden einzelne Blisterpackungen dann in einer Stanzstation ausgestanzt. Zu beachten ist dabei, dass in den meisten Arbeitsstationen Werkzeuge eingesetzt werden, die als Formatteile an das Format der jeweils zu erzeugenden Blisterpackungen angepasst werden müssen. Insbesondere in einer Formstation ist es unmittelbar einleuchtend, dass die Qualität des Formprozesses entscheidend von der korrekten Positionierung der Formwerkzeuge abhängt, um nachfolgend mittig die Produkte in den Näpfen platzieren und diese Näpfe nachfolgend in der Siegelstation abzudichten.

Der Erfindung liegt daher die Aufgabe zugrunde, eine Arbeitsstation der eingangs genannten Art so auszubilden, dass der Wechsel des Werkzeugs vereinfacht ist bei Erzielung einer hohen Genauigkeit der Arbeitsposition.

Diese Aufgabe wird bei einer Arbeitsstation der eingangs genannten Art dadurch gelöst, dass in der Oberfläche des Werkzeugs ein Konus ausgebildet ist zur Beaufschlagung durch einen Klemmbolzen, der eine zur Anlage in dem Konus kommende Konusfläche aufweist, deren Mittelachse in der Arbeitsposition des Werkzeugs mit Versatz zu der durch den Konus definierten Mittelachse liegt, dass in Einschubrichtung zwischen dem Werkzeugträger und dem Werkzeug eine Nut-Feder-Struktur ausgebildet ist, und dass der Klemmbolzen durch einen einfachwirkenden Klemmzylinder gebildet ist, der von einer in Klemmrichtung wirkenden Klemmfeder beaufschlagt ist.

Diese Arbeitsstation zeichnet sich dadurch aus, dass durch die Kombination einer Bewegung in radialer Richtung und in axialer Richtung eine reproduzierbare Postionierung des Werkzeugs erzielt wird, die auch ein sicheres Halten des Werkzeugs bei horizontalen und vertikalen Stationsbewegungen sicherstellt, nämlich durch die Ausnutzung des Zusammenwirkens des Konus mit der Konusfläche mit der weiterhin erfolgenden Reduzierung eines möglichen Spiels durch den Versatz der Mittelachsen, weil durch den erfindungsgemäß vorgesehenen Versatz eine feste Anlage der Konusfläche in dem Konus erfolgt sowie ein geringfügiger Verstellweg des Werkzeugs zum Ausgleich des ursprünglichen Versatzes während des Klemmvorganges erzwungen wird.

Zu beachten ist weiterhin, dass die die erfindungsgemäße Arbeitsstation integrierenden Thermoformmaschinen häufig in der pharmazeutischen Industrie eingesetzt werden, in der sehr hohe Anforderungen an die Produktsicherheit bestehen, damit die pharmazeutischen Produkte nicht vorzeitig altern und die in den Produkten enthaltenen Wirkstoffe aufgrund einer ungenügenden Dichtigkeit der Verpackung sich vorzeitig zersetzen. Da die Werkzeuge austauschbar sind und darüber hinaus auch einem gewissen Verschleiß unterliegen, ist es wichtig, dass nur die die erforderlichen Spezifikation erfüllenden Werkzeuge eingesetzt werden, um Nachahmerwerkzeuge mit unzulässigen Toleranzen auszuschließen. Deshalb ist weiterhin vorgesehen, dass dem Werkzeug eine Werkzeugkennung und dem Werkzeugträger ein Werkzeugidentifikationssystem zur Kontrolle der Werkzeugkennung zugeordnet ist, damit beim Aufschieben des Werkzeugs auf den Werkzeugträger und dem Erreichen der gewünschten Arbeitssposition eine entsprechende Kontrolle erfolgen kann. In einfachster Weise ist dies realisiert, indem die Werkzeugkennung und das Werkzeugsidentifikationssystem nach dem Schloss-Schlüssel-Prinzip zueinander komplementäre Strukturen aufweisen, deren lagerichtige Übereinstimmung die Einnahme der korrekten Arbeitsposition des Werkzeugs auf dem Werkzeugträger-ermöglicht. Es ist damit buchstäblich auch möglich, einen Schlüssel vorzusehen, durch den der Einsatz eines Werkzeugs erst autorisiert wird.

Alternativ besteht auch die Möglichkeit, dass die Werkzeugkennung einen beschreibbaren Datenträger aufweist zum Auslesen durch eine dem Werkzeugidentifikationssystem zugeordnete Einheit zum Lesen und/oder Schreiben, wobei insbesondere die Lese-Schreib-Einheit einen zusätzlichen Nutzen ermöglicht, da für den Einsatz des Werkzeugs die Wartungsinterval überwacht werden können und somit ein integrierter Betriebsstundenzähler realisiert ist.

Eine weitere Steigerung der Sicherheit ist möglich, wenn dem Werkzeugträger ein induktiver Sensor zur Lageerfassung des Werkzeugs zugeordnet ist. Einer weiteren Erleichterung des Werkzeugswechsel dient es, wenn die Nut eine hinterschnittene Nut ist, da insbesondere bei Werkzeugen, die hängend eingesetzt werden, die hinterschnittene Nut, die bespielsweise als Schwalbenschwanz realisiert ist, die Gewichtskraft des Werkzeugs tragen kann und somit der Nutzer davon entlastet ist, der lediglich die radiale Einschubbewegung bewirken muss, nach der durch die axiale Verstellung des Klemmzylinders, bewirkt duch die Klemmfeder, das Werkzeug zwangsweise positioniert wird.

Weiterhin besteht die Möglichkeit, dass im Werkzeug ein durch den Werkzeugträger gespeistes Kühlsystem ausgebildet ist, dass über Steckkupplungen beim Aufschieben anflanschbar ist, wobei den Steckkupplungen Ausgleichselemente zugeordnet sind. Zu beachten ist dabei, dass auch die Steckkupplungen zu einander komplementäre Strukturen aufweisen, also zur Realisierung des Schloß-Schlüssel-Prinzips genutzt werden können.

Im folgenden wird die Erfindung an einem in der Zeichnung dargestellten Ausführungsbeispiel näher erläutert; es zeigen:
- Fig. 1: eine schematische Darstellung einer Thermoformmaschine mit der durch den Buchstaben X gekennzeichneten, zur Erläuterung der Erfindung genutzten Formstation,
- Fig. 2: eine perspektivische Darstellung eines Werkzeugsträgers,
- Fig. 3: eine perspektivische Darstellung eines austauschbaren Werkzeugs, gebildet durch ein unteres Formwerkzeug,
- Fig. 4: eine perspektivische Darstellung des unteren Formwerkzeugs aus Fig. 3 aus einer anderen Sicht,

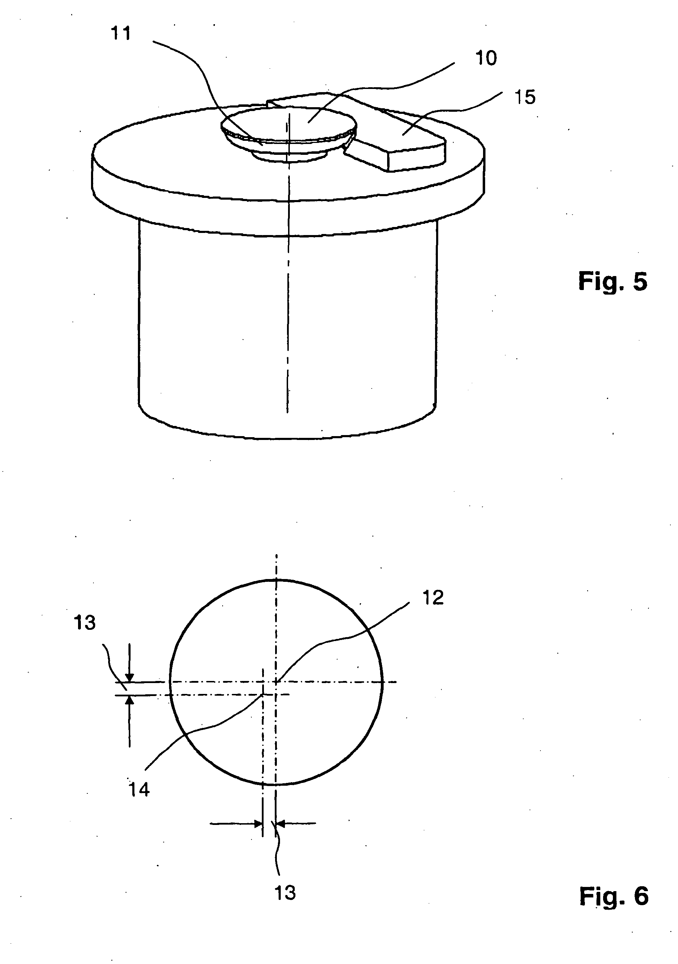

- Fig. 5: eine schematische Darstellung zur Erläuterung des Zusammenwirkens des Konus mit der Konusfläche, und
- Fig. 6: eine schematische Darstellung zur Veranschaulichung des Versatzes der Mittelachsen.

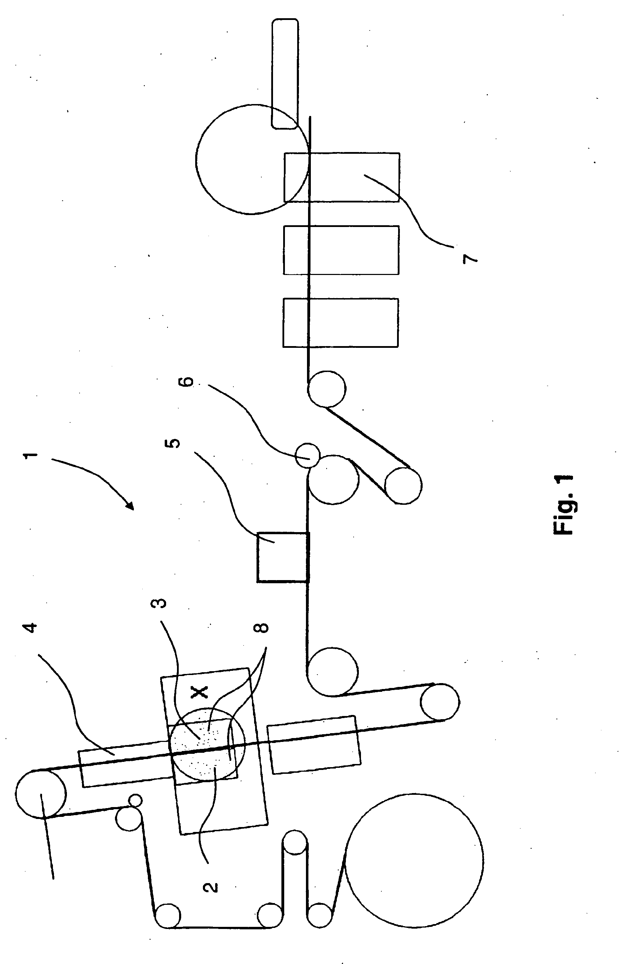

Fig. 1 zeigt schematisch eine Thermoformmaschine 1, in der die mit X gekennzeichnete Formstation ein unteres Formwerkzeug 2 sowie ein oberes Formwerkzeug 3 aufweist. Die Thermoformmaschine 1 umfasst weiter nur schematisch durch Rechtecke symbolisierte Arbeitsstationen, nämlich eine Heizstation 4, eine Füllstation 5, eine Siegelstation 6 sowie eine Stanzstation 7.

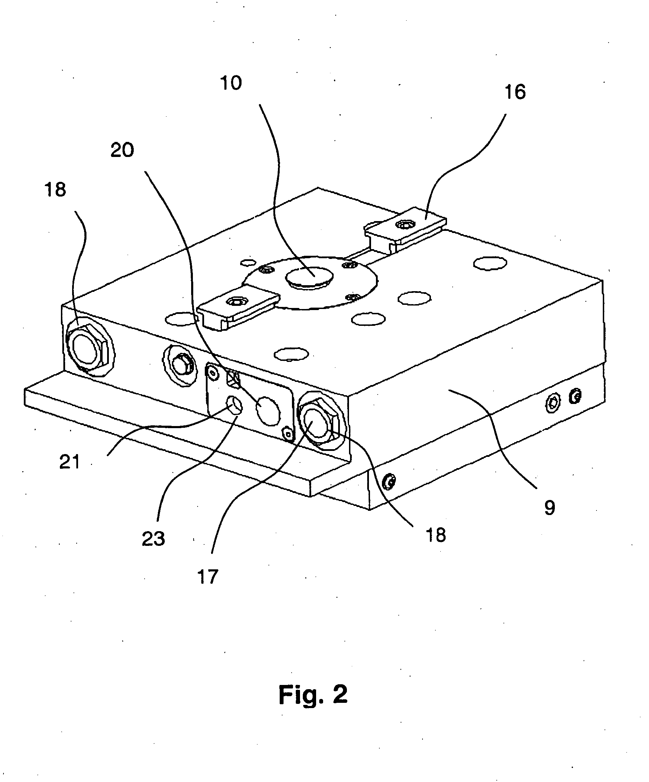

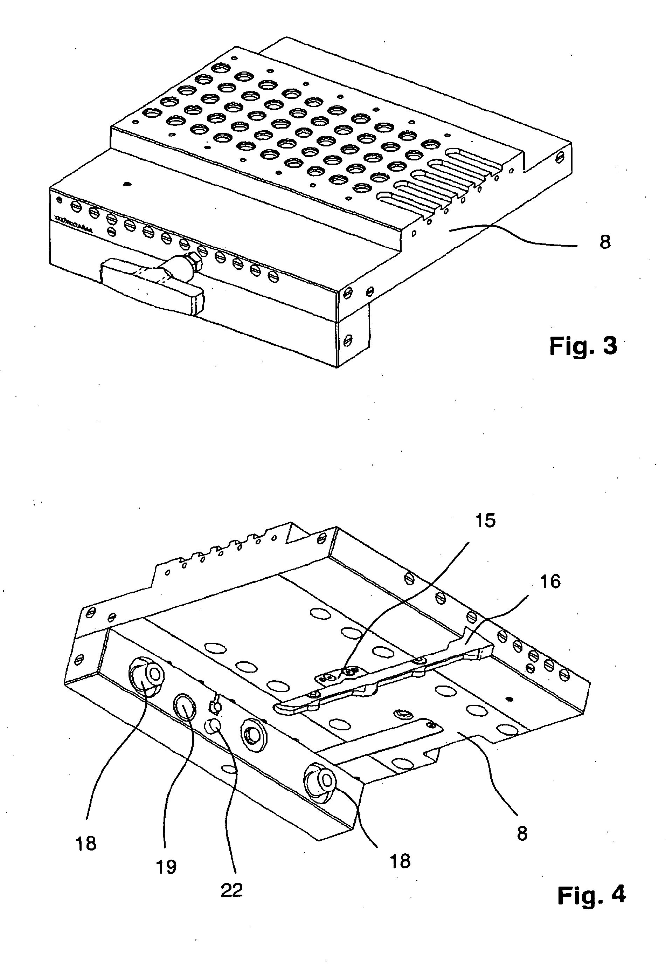

In den Arbeitsstationen ist es häufig, dass Werkzeuge 8 austauschbar angeordnet sind, wofür Vorrichtungen zum Klemmen eines austauschbaren Werkzeugs 8 an einem eine Anschlagfläche für das Werkzeug 8 bereitstellenden Werkzeugträger 9 verwendet werden. Diese Vorrichtungen weisen in der Oberfläche des Werkzeugs 8 einen Konus 15 auf zum Beaufschlagen durch einen Klemmbolzen 10, der einen zur Anlage in dem Konus 15 kommende Konusfläche 11 besitzt. Die Mittelachse 12 der Konusfläche 11 ist in der Arbeitsstation des Werkzeugs mit Versatz 13 zu der durch den Konus 15 definierten Mittelachse 14 positioniert. In Einschubrichtung ist zwischen dem Werkzeugträger 9 und dem Werkzeug 8 eine Nut-Feder-Struktur 16 ausgebildet. Weiterhin ist der Klemmbolzen 10 durch einen einfachwirkenden Klemmzylinder gebildet, der von einer in Klemmrichtung wirkenden Klemmfeder beaufschlagt ist, so dass die Klemmaufgabe durch die Federkraft der Klemmfeder übernommen wird und die Lösung der Klemmung durch den Klemmzylinder erfolgt. Fig. 4 läßt erkennen, dass die Nut in dem Werkzeug 8 ausgebildet und als hinterschnittene Nut realisiert ist. Fig. 4 in Verbindung mit Fig. 2 zeigen weiterhin, dass im Werkzeug 8 ein durch den Werkzeugträger 9 gespeistes Kühlsystem 17 ausgebildet ist, dass über Steckkupplungen 18 beim Auschieben anflanschbar ist, wobei den Steckkupplungen 18 Ausgleichselemente zugeordnet sind, um die Dichtigkeit zu gewährleisten im Rahmen der beim Werkzeugwechsel erreichbaren Reproduzierbarkeit hinsichtlich der Arbeitsposition.

Dem Werkzeug 8 ist eine Werkzeugkennung und dem Werkzeugträger 9 ein Werkzeugidentitfikationssystem zur Kontrolle der Werkzeugkennung zugeordnet, wobei bei dem in der Zeichnung dargestellten Ausführungsbeispiel, ersichtlich aus Fig. 4, das Werkzeug 8 einen Datenträger 19 als Teil der Werkzeugkennung besitzt, der vom Werkzeugträger 9 kontrolliert werden kann, der dazu einen Sensor 20 bzw. eine Einheit zum Lesen und/oder Schreiben besitzt. Fig. 2 zeigt weiterhin, einen induktiven Sensor 21 am Werkzeugträger 9, der der Positionsabfrage dient. Dazu weist das Werkzeug 8, ersichtlich aus Fig. 4, einen Zapfen 22 auf, der in eine Zapfenaufnahme 23 des Werkzeugsträgers 9 eingreift, die als zueinander komplementäre Strukturen aufgefasst werden können, die auch eine komplexere Gestaltung aufweisen können, umso das Schloss-Schlüssel-Prinzip für die Werkzeugidentifikation auszunutzen.

## Patentansprüche

1. Arbeitsstation, insbesondere in einer Thermoformmaschine (1), mit einer Vorrichtung zum Klemmen eines austauschbaren Werkzeugs (8) an einem eine Anschlagfläche für das Werkzeug (8) bereitstellenden Werkzeugträger (9), **dadurch gekennzeichnet, dass** in der Oberfläche des Werkzeugs (8) ein Konus (15) ausgebildet ist zum Beaufschlagen durch einen Klemmbolzen (10), der eine zur Anlage in dem Konus (15) kommende Konusfläche (11) aufweist, deren Mittelachse (12) in der Arbeitsposition des Werkzeugs (8) mit Versatz (13) zu der durch den Konus (15) definierten Mittelachse (14) liegt, daß in Einschubrichtung zwischen dem Werkzeugträger (9) und dem Werkzeug (8) eine Nut-Feder-Struktur (16) ausgebildet ist, und daß der Klemmbolzen (10) durch einen einfachwirkenden Klemmzylinder gebildet ist, der von einer in Klemmrichtung wirkenden Klemmfeder beaufschlagt ist.

2. Arbeitsstation nach Anspruch 1, **dadurch gekennzeichnet, daß** dem Werkzeug 8 eine Werkzeugkennung und dem Werkzeugträger 9 ein Werkzeugidentifikationssystem zur Kontrolle der Werkzeugkennung zugeordnet ist.

3. Arbeitsstation nach Anspruch 2, **dadurch gekennzeichnet, daß** die Werkzeugkennung und das Werkzeugidentifikationssystem nach dem Schloß-Schlüssel-Prinzip zueinander komplementäre Strukturen aufweisen, deren lagerichtige Übereinstimmung die Einnahme der korrekten Arbeitsstation des Werkzeugs 8 auf dem Werkzeugträger 9 ermöglicht.

4. Arbeitsstation nach Anspruch 2 oder 3, **dadurch gekennzeichnet, daß** die Werkzeugkennung einen beschreibbaren Datenträger 19 aufweist zum Auslesen durch eine dem Werkzeugidentifikationssystem zugeordnete Einheit zum Lesen und/oder Schreiben.

5. Arbeitsstation nach einem der Ansprüche 1 bis 4, **dadurch gekennzeichnet, daß** dem Werkzeugträger 9 ein induktiver Sensor 21 zur Lageerfassung des Werkzeugs 8 zugeordnet ist.

6. Arbeitsstation nach einem der Ansprüche 1 bis 5, **dadurch gekennzeichnet, daß** die Nut eine hinterschnittene Nut ist.

7. Arbeitsstation nach einem der Ansprüche 1 bis 6, **dadurch gekennzeichnet, daß** im Werkzeug 8 ein durch den Werkzeugträger 9 gespeistes Kühlsystem 17 ausgebildet ist, das über Steckkupplungen 18 beim Aufschieben anflanschbar ist.

8. Arbeitsstation nach Anspruch 7, **dadurch gekennzeichnet, daß** den Steckkupplungen Ausgleichselemente zugeordnet sind.

## Claims

1. Workstation, in particular in a thermoforming machine (1), comprising a device for clamping an exchangeable tool (8) to a tool holder (9) having a stop face for the tool (8), **characterised in that** a cone (15) is formed in the surface of the tool (8) so as to be loaded by a clamping bolt (10) having a cone surface (11), which comes to lie against the inside of the cone (15) and of which the central axis (12) is positioned, in the working position of the tool (8), with an offset (13) from the central axis (14) defined by the cone (15), **in that** a tongue-and-groove construction (16) is formed between the tool holder (9) and the tool (8) in the direction of insertion, and **in that** the clamping bolt (10) is formed by a single-acting clamping cylinder which is loaded by a clamping spring acting in the clamping direction.

2. Workstation according to claim 1, **characterised in that** a tool identifier is associated with the tool 8 and a tool identification system for checking the tool identifier is associated with the tool holder 9.

3. Workstation according to claim 2, **characterised in that** the tool identifier and the tool identification system have mutually complementary constructions in the manner of a lock and key, the correspondence of said constructions in the correct position allowing the tool 8 to be received by the correct workstation on the tool holder 9.

4. Workstation according to either claim 2 or claim 3, **characterised in that** the tool identifier comprises a writable data carrier 19 to be read by a unit for reading and/or writing which is associated with the tool identification system.

5. Workstation according to any one of claims 1 to 4, **characterised in that** an inductive sensor 21 for detecting the position of the tool 8 is associated with the tool holder 9.

6. Workstation according to any one of claims 1 to 5, **characterised in that** the groove is an undercut groove.

7. Workstation according to any one of claims 1 to 6, **characterised in that** a cooling system 17 fed by the tool holder 9 is formed in the tool 8 and can be slid on and flange-mounted via plug-type connections 18.

8. Workstation according to claim 7, **characterised in that** compensation elements are associated with the plug-type connections.

## Revendications

1. Station de travail, en particulier dans une machine de thermoformage (1), avec un dispositif pour serrer un outil interchangeable (8) sur un porte-outil (9) offrant une surface de butée pour l'outil (8), **caractérisée en ce qu'**un cône (15) est réalisé dans la surface de l'outil (8) pour la sollicitation par un boulon de serrage (10), qui présente une surface conique (11) pour venir au contact du cône (15), dont l'axe médian (12), dans la position de travail de l'outil (8), se situe avec déport (13) par rapport à l'axe médian (14) défini par le cône (15), qu'une structure à rainure et languette (16) est réalisée dans une direction d'insertion entre le porte-outil (9) et l'outil (8), et que le boulon de serrage (10) est formé par un cylindre de serrage à simple effet, qui est sollicité par un ressort de serrage agissant dans la direction de serrage.

2. Station de travail suivant la revendication 1, **caractérisée en ce qu'**une identification d'outil est associée à l'outil (8) et un système d'identification d'outil est associé au porte-outil (9) pour le contrôle de l'identification d'outil.

3. Station de travail suivant la revendication 2, **caractérisée en ce que** l'identification d'outil et le système d'identification d'outil présentent des structures complémentaires entre elles suivant le principe serrure - clé, dont la coïncidence en position correcte permet l'occupation de la position de travail correcte de l'outil (8) sur le porte-outil (9).

4. Station de travail suivant l'une des revendications 2 et 3, **caractérisée en ce que** l'identification d'outil présente un support de données (19) descriptible pour la lecture par une unité pour la lecture et/ou l'écriture associée au système d'identification d'outil.

5. Station de travail suivant l'une des revendications 1 à 4, **caractérisée en ce qu'**un capteur inductif (21) est associé au porte-outil (9) pour la détection de position de l'outil (8).

6. Station de travail suivant l'une des revendications 1 à 5, **caractérisée en ce que** la languette est une languette en contre-dépouille.

7. Station de travail suivant l'une des revendications 1 à 6, **caractérisée en ce qu'**un système de refroidissement (17) alimenté par le porte-outil (9) est réalisé dans l'outil (8), lequel système peut être bridé par l'intermédiaire d'accouplements enfichables (18) lors de l'insertion.

8. Station de travail suivant la revendication 7, **caractérisée en ce que** des éléments d'équilibrage sont associés aux accouplements enfichables.
